# EUROPEAN PATENT APPLICATION

(11) **EP 1 989 980 A1**
(43) Date of publication of application: **12.11.2008**
(21) Application number: 07404001.5
(22) Date of filing: 11.05.2007
(51) Int. Cl.: A47J 43/08

(54) **Kitchen robot having a movable drive unit**

(71) Applicant: Erna-Mas Makina Ticaret Ve Sanayi A.S., Istanbul (TR)
(72) Inventor: Ilhan, Gursel c/o Ataturk Organize Sanayi Bolgesi, Istanbul (TR)
(74) Representative: Basalan, Ahmet

(57) **Abstract**

Present invention is related to the use of a drive unit (2) that is movable in vertical and horizontal/circular directions automatically and in a combined way via a locking switch (1) located thereon and equipped with outlet shaft having a main motor and a motion transfer mechanism, and a motor actuating/speed adjusting electronic arrangement control switch (3), in the devices for food preparation, i.e. in the kitchen robots.

## Description

Present invention is related to the use of a drive unit (2) that is movable in vertical and horizontal/circular directions automatically and in a combined way via a locking switch (1) located thereon and equipped with outlet shaft (8) having a main motor (10) and a motion transfer mechanism (11), and a motor actuating/speed adjusting electronic arrangement control switch (3), in the devices for food preparation, i.e. in the kitchen robots.

It is easier to use than the traditional kitchen robots available at the market and also it is possible to use those units made of glass.

This invention, as different from the traditional kitchen robots, has a movable drive unit (2) disposed in the robot body (6) and thus ensures all food preparation actions, such as food cutting, ice breaking, meat mincing, dough kneading, egg beating with a mixer apparatus, cake holding, squeezing rigid fruits and vegetables, orange squeezing, grating, mixing juices, potato slicing, cheese grating, etc. either in the robot container (4) or in the blender container (5).

In this invention, one of the work accessories (9) (cutting/slicing/smashing) required is located in the robot container or blender while the kitchen robot is standstill, the lids (12) are closed appropriately.

The upper handle (7) on work accessories (9) such as cutting/slicing etc., always remains in the middle of the lid (12) and outside in a ready position. Movable drive unit (2) is rotated up to 90° until aligns with the robot container (4) or blender container (5) handle (7) and drive unit (2) handle (8) (also the outlet shaft) at the rotation axis (13). When the handles (7-8) get aligned, drive unit (2) is manually pushed down and the drive unit (2) is caused to be fixed on the locks (14) over the main body (6). In this position the accessory handle (7) and power unit handle / outlet shaft (8) of the device fully grabs each other and are ready for power transfer. Food preparation processes are being started by the command switch (3) of the device. When the process is over, lock switch is (1) pressed and drive unit (2) automatically arises via spring force and releases the robot container (4) or the blender container (5).

Within the invention, by rotating the movable drive unit up to 90° and circularly over a kitchen robot container (4) or an accessory (9) in a blender container (5) that is ready to operate and by pressing manually in vertical course, it's being locked to the body via the locks (14) and by power transfer to the accessory (9), and the motor (10) is actuated via the electronic arrangement switch.

In this invention, the movable drive unit (2) is located on the kitchen robot (4) or the accessory in the blender container (5) that is ready for operation with a circular and a rotational movement up to 90 degrees, and pushed manually, locked to the body and attached to the accessory and the motor is actuated with the electronic arrangement switch. Drive group outlet gear (female/male) is centered onto the male/female clutch provided at the top of cutter/breaker apparatus in vessel and thus drives the same.

In the conventional method, the engine, belt/pulley and/or gear system transfer units are fixed, process vessels are placed on the outlet axis that is fixed and process is started.

In this patent, the main body of the robot constitutes a seat for vessel/blender vessel, and there is no power outlet unit located from below. The vessel seat in the main body acts to fix the vessels in position in order to ensure that the outlet axis is received by the movable drive group above the vessel.

Main body ensures that movable drive group is placed in an appropriate position with respect to vessels and has a seat which allows that movable mechanisms of the drive group opens and closes with a vertical/ circular combined movement with spiral actions in a safe manner.

Drive group comprises an engine, transfer units, outlet gear and a safety switch, and multiple plastic components that maintain them as a single unit. Drive unit is placed into main body that contains spiral female/ male seats. A spring is provided at the vertical axis between main body and drive group. When drive group's lock is opened manually, spring comes over the total weight of drive group with a predetermined spring push force and ensures that drive group is moved in vertical direction. When the male/female pins on drive group move in the spiral male/female seats on main body, a vertical spring force causes drive group to move in a combined way, both in vertical direction and circular orientation up to 90 degrees with respect to vertical axis. Thereby the outlet gear provided on the drive group may easily open and close over the vessels with a circular/ vertical movement. The engine in moveable drive group is supplied power through a power cable that is located on main body in a way to ensure that it is not damaged during vertical/circular movement.

In this invention, one of the work accessories (cutting/slicing/smashing/mixing/dough conditioning/rigid fruit or vegetable squeezing) required is located in the robot container or blender while the kitchen robot is standstill, the lids are closed appropriately, and the drive unit is made ready to operate by being rotationally moved and fitted over the seat on the lid.

In this invention, the switch disposed on the movable drive unit is only movable after the motor is completely stopped, and moved first in vertical, then in circular directions to release the working container (robot container or blender).

### ADVANTAGES OF THIS INVENTION

1) It is very easier to use than the traditional kitchen robots.
2) In this invention, the movable (not stationary) drive unit drives the work accessories in the robot container from above (no funnel present in the robot container).
3) In this invention, the movable drive unit drives the work accessories in the blender container disposed in the place of robot container.
4) In this invention, all safety rules are duly observed since either the robot container or the blender container is forcefully covered by the drive unit located on the lid during operation.
5) As a result of the arrangement of this invention, a robot container made of glass or a blender container made of glass can be used, which is impossible with the traditional robots.
6) As a result of the arrangement of this invention, a kitchen robot having a movable drive unit, can have a blender container or robot container, made of both glass, plastics and stainless steel.

### DESCRIPTION OF FIGURES:

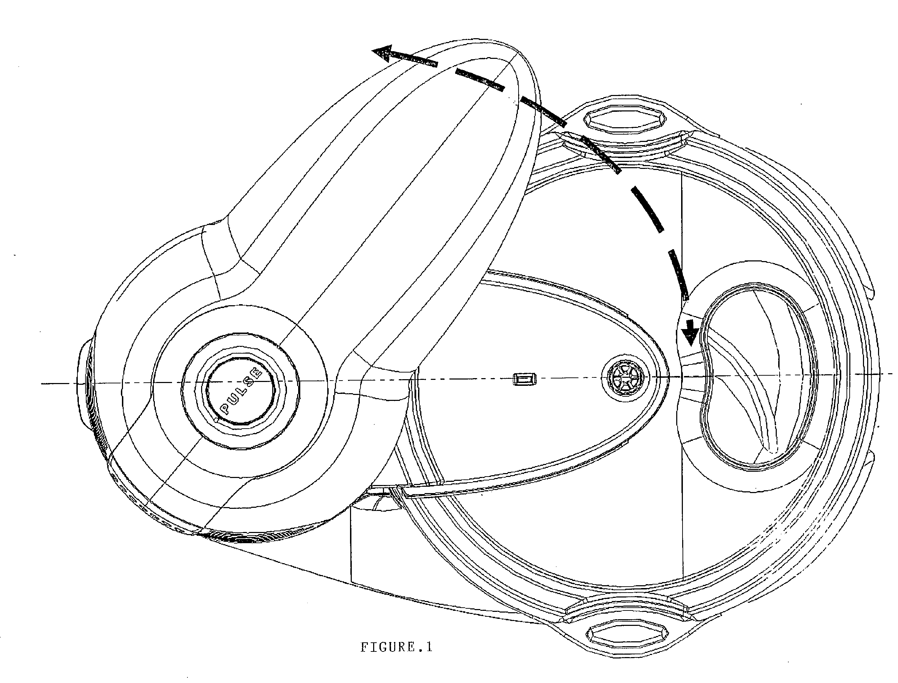

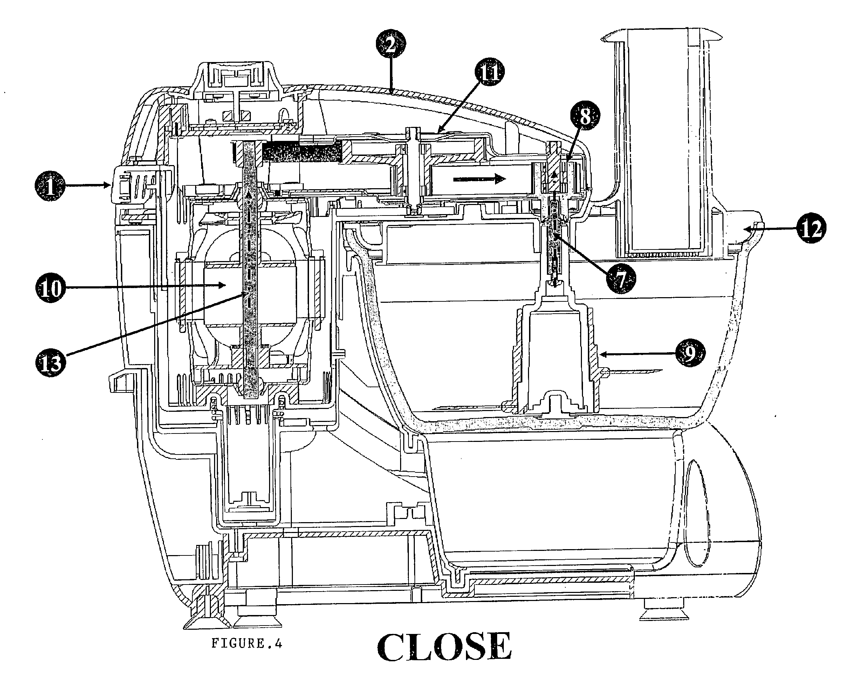

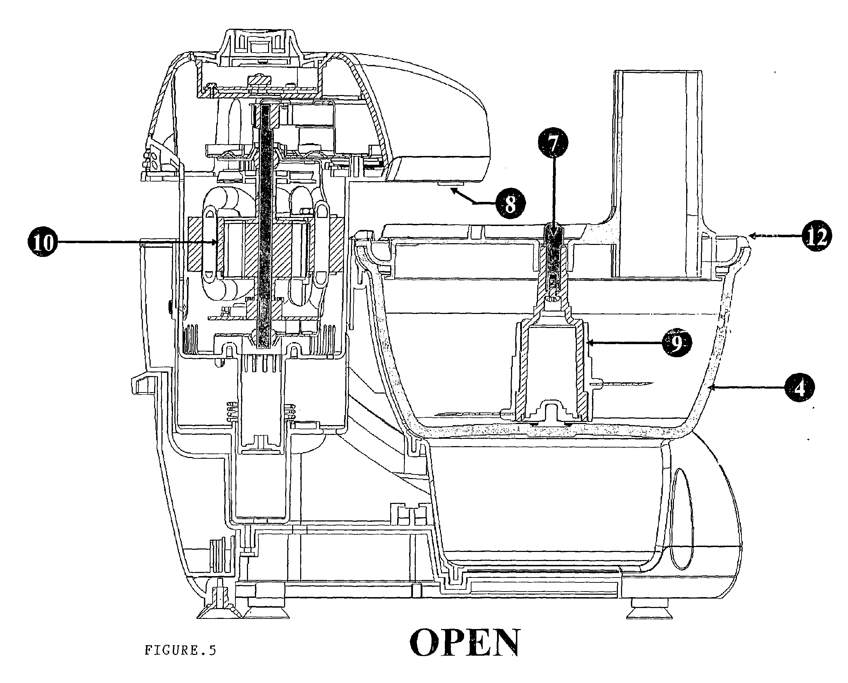

**Figure 1****:** General view of the kitchen robot from up (movable drive unit is open)

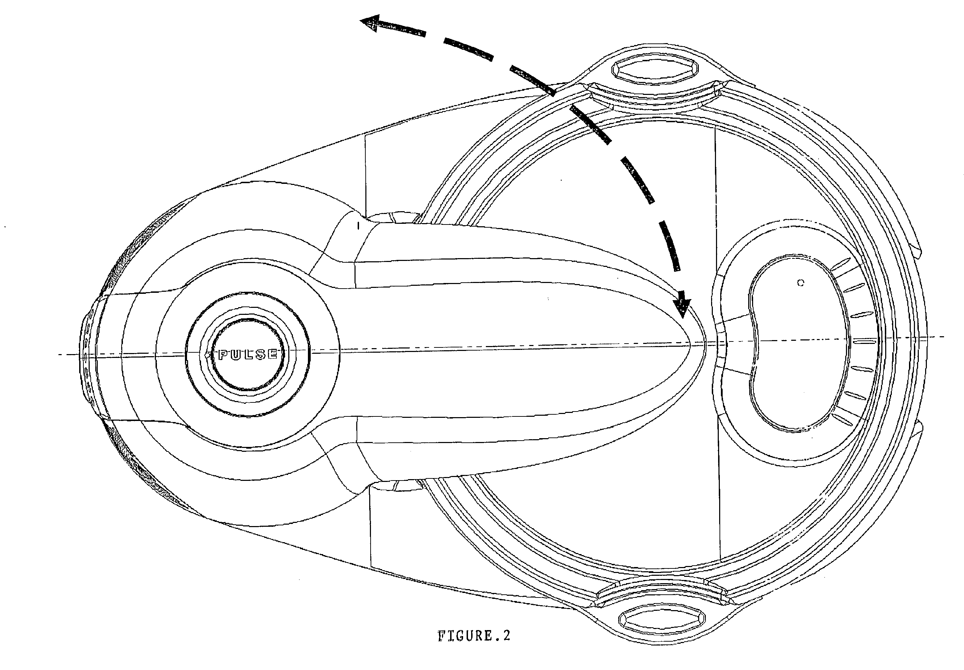

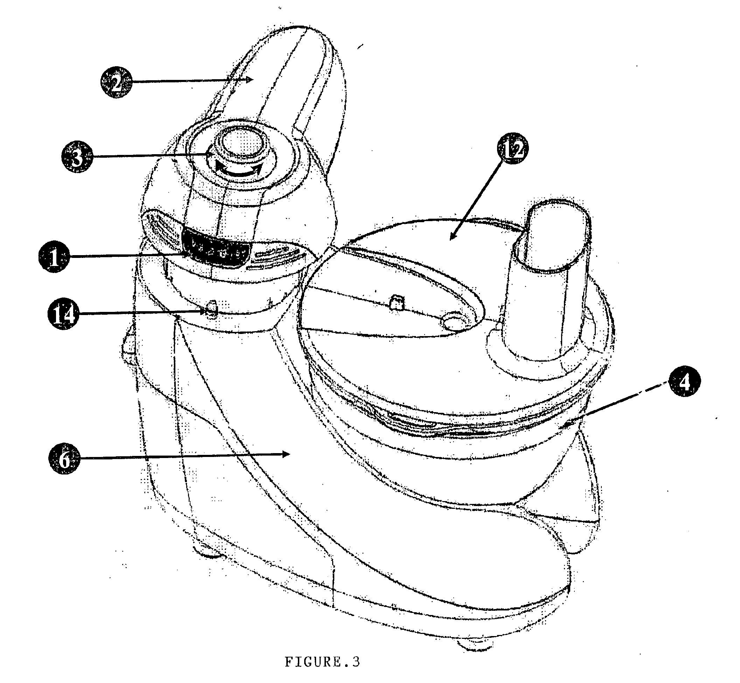

**Figure 2****:** General view of the kitchen robot from up (movable drive unit is closed)
**Figure 3****:**
   (2) Movable drive unit
   (3) Electronic arrangement control switch
   (1) Locking switch
   (14) Locks
   (6) Robot Body
   (12) Lids
   (4) Kitchen Robot container
**Figure 4****: Close mode**
   (1) Locking switch
   (10) Motor
   (13) Rotation axis
   (2) Movable drive unit
   (11) Motion transfer mechanism
   (8) Outlet shaft
   (7) Handle
   (9) Accessory
   (12) Lids
**Figure 5****: Open mode**
   (10) Motor
   (8) Outlet shaft
   (7) Handle
   (9) Accessory
   (12) Lids
   (4) Kitchen robot container

## Claims

1. The use of a drive unit (2) that is movable in vertical and horizontal/circular directions automatical and in a combined way via a locking switch (1) located thereon and equipped with outlet shaft having a main motor and a motion transfer mechanism, and a motor actuating/speed adjusting electronic arrangement control switch (3), in the devices for food preparation, i.e. in the kitchen robots, **characterized in that** it has a movable drive unit disposed in the robot body (6) and thus ensures all food preparation actions, such as food cutting, ice breaking, meat mincing, dough kneading, egg beating with a mixer apparatus, cake holding, squeezing rigid fruits and vegetables, orange squeezing, grating, mixing juices, potato slicing, cheese grating, etc. either in the robot container (4) or in the blender container (5).

2. The use according to claim 1, wherein one of the work accessories (cutting/slicing/smashing/mixing/dough conditioning/rigid fruit or vegetable squeezing) required is located in the robot container or blender while the kitchen robot is standstill, the lids are closed appropriately and the device is prepared for functioning by moving the drive unit circularly and fitting it in its seat on the lid.

3. This invention is according to claim 1 wherein an outlet gear/clutch of a drive unit is positioned onto the top gear/clutch of a cutter/breaker accessory in the kitchen robot vessel/blender vessel that is ready to operate, with a circular rotational movement up to 90 degrees, and drive group is directed downwards manually overcoming the spring force between drive group and main body to fit the drive group in the locks provided in the main body, thereby engine is actuated safely with an electronic arrangement button.

4. The invention according to claim 1, wherein the switch disposed on the movable drive unit is only movable after the motor is completely stopped, and moved first in vertical, then in circular directions to release the working container (robot container or blender).
